# EUROPÄISCHE PATENTSCHRIFT

(11) **EP 1 699 375 B1**
(45) Veröffentlichungstag und Bekanntmachung des Hinweises auf die Patenterteilung: **19.05.2010**
(21) Anmeldenummer: 04820952.2
(22) Anmeldetag: 04.12.2004
(51) Int. Cl.: A61C 3/02

(54) **VERFAHREN UND BOHRER ZUR EXTRAKTION EINER ZAHNWURZEL**
METHOD AND DRILL BIT FOR EXTRACTING A ROOT OF A TOOTH
METHODE ET FORET POUR EXTRAIRE UNE RACINE DENTAIRE

(30) Priorität: 23.12.2003 CH 221303
(43) Veröffentlichungstag der Anmeldung: 13.09.2006
(73) Patentinhaber: Syfrig, Benno, 6003 Luzern (CH)
(72) Erfinder: Syfrig, Benno, 6003 Luzern (CH)
(74) Vertreter: Luchs, Willi
(86) Internationale Anmeldenummer: PCT/EP2004/013821
(87) Internationale Veröffentlichungsnummer: WO 2005/065566

(56) Entgegenhaltungen:
- DE-A1- 19 815 133
- US-A- 3 802 055
- US-A- 4 661 064
- US-A- 5 645 427

## Beschreibung

Die Erfindung bezieht sich auf einen Bohrer nach dem Oberbegriff des Anspruches 1.

Das Ausziehen der Zahnwurzel ist in den Fällen mit Schwierigkeiten verbunden, wenn die Krone abgebrochen ist oder die Wurzel aus anderen Gründen nicht frei liegt, sodass kein Zugang für eine Zange oder dergleichen verbleibt. In diesem Fall wird in Längsrichtung des Zahnes eine Bohrung im Wurzelteil erzeugt und in diese eine Schraube eingedreht. Mit der Schraubenöse wird dann unter Einwirkung eines Zuges in Zahnlängsrichtung die Zahnwurzel extrahiert. Hierbei besteht die Gefahr, dass die Alveole beschädigt und dies eine entsprechende Kammaugmentation notwendig macht.

Eine derartige Einrichtung ist beispielsweise aus der DE 19 815 133 bekannt. Nachteilig ist indessen, dass eine Bohrung in der Zahnwurzel stufenweise durch die Verwendung von mehreren im Durchmesser grösser werdenden Bohrer aufgebohrt werden muss. Die Eindringtiefe einer solchen Bohrung ist zudem beschränkt, da der Zahn eine konische Form hat. Dies wiederum erlaubt nur die Verwendung einer relativ kurzen Zugschraube für die Extraktion. Der Halt solcher relativ kurzen Zugschrauben im Zahnmaterial ist beschränkt.

In der Druckschrift US-A-4,661,064 ist ein rotierendes Werkzeug für die Anwendung in der Dentologie beschrieben, welches einen vorderen zylindrischen, leicht konischen oder rundlichen, mit Diamantpulver beschichteten Bohrerteil aufweist. In diesem Bohrerteil sind unbeschichtete wendelförmige Nuten enthalten, welche ein besseres Kühlen des Schleifbohrers und ein besseres Abführen von aufgebohrtem Material ermöglichen soll.

Mit der Erfindung soll die Aufgabe gelöst werden, einen Bohrer zu schaffen, mit dem die oben erwähnten Nachteile vermieden werden können und damit eine sichere und einfache Extraktion einer Zahnwurzel ermöglicht wird.

Der erfindungsgemässe Bohrer ist gekennzeichnet durch die Merkmale nach Anspruch 1.

Mit dem erfindungsgemässen Bohrer erfolgt das Aufbohren der Zahnwurzel in einem Arbeitsgang. Gegenüber dem für den oberen Wurzelteil bestimmten Bohrer ist für den unteren Wurzelkanal ein geringerer Durchmesser in Form eines Stiftansatzes mit abrasiver Oberfläche vorhanden.

Dadurch gelingt es, eine Öffnung in einen Wurzelbereich zu erzeugen, die sich bis nahe an das untere Ende der Zahnwurzel erstrecken kann. In diesem Bereich ist das Zahnmaterial erfahrungsgemäss sehr kompakt. Dadurch findet der hernach in den Bereich dieser untersten Wurzelöffnung eingreifende Gewindestift für die Extraktion einen guten Halt. Mit diesem Verfahren wird ausserdem eine maximale Schonung der Alveole erzielt.

Als weiterer Vorteil zeichnet sich dieser erfindungsgemässe Bohrer dadurch aus, dass man unabhängig vom anatomischen Wurzelkanal aufbohren kann. Auch wenn dieser Wurzelkanal des öfteren durch Verkalkung, durch einen abgebrochenen Bohrer oder ähnlichem verschlossen ist, kann mit dem Bohrer in einer beliebigen Position der Wurzel ein gewünschtes Loch auch bei einem kleinen Wurzelrest noch herbeigeführt werden.

Ausführungsbeispiele der Erfindung sowie weitere Vorteile derselben sind nachfolgend anhand der Zeichnung näher erläutert. Es zeigt:
- Fig. 1: zeigt einen schematischen Schnitt eines erfindungsgemässen Bohrers beim Aufbohren einer Zahnwurzel, und
- Fig.2: den Bohrer nach Fig. 1 in Ansicht.

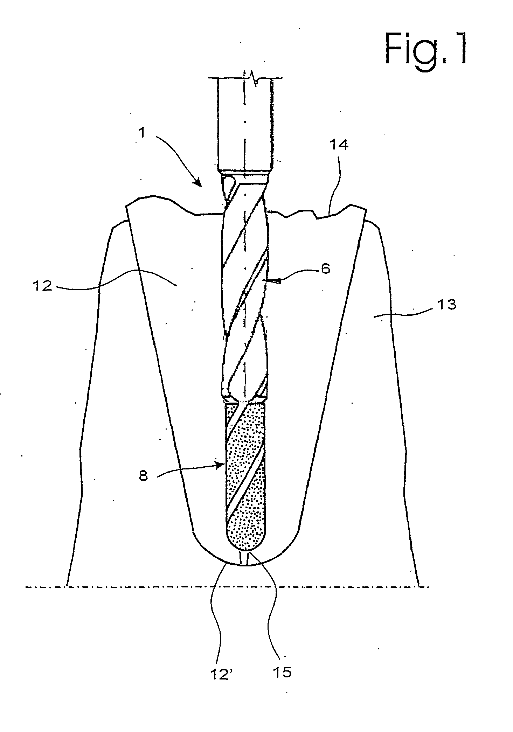

Fig. 1 zeigt schematisch und stark vergrössert eine von einem umgebenden Zahnfleisch 13 gehaltene Zahnwurzel 12 eines abgebrochenen Zahnes mit einer Bruchstelle 14. Es ist hierbei ein in diese Zahnwurzel 12 hineingebohrter Bohrer 1 veranschaulicht, der nachfolgend näher erläutert ist.

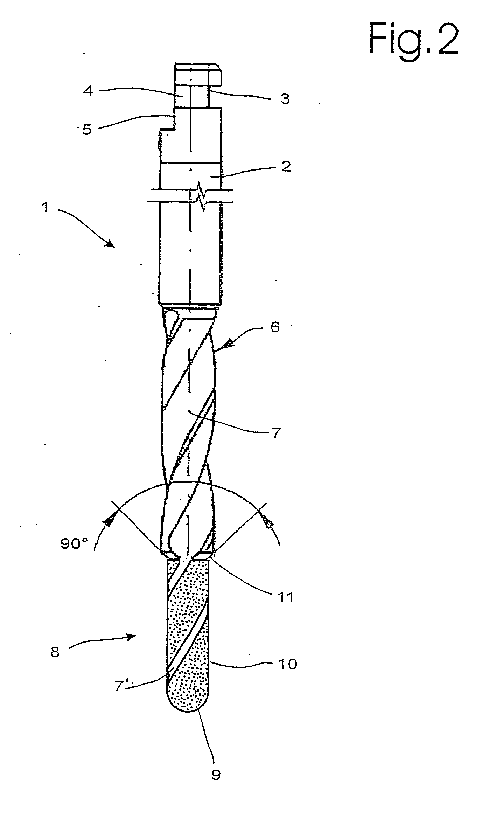

Gemäss Fig.2 enthält der erfindungsgemässe, aus Stahl bestehende Bohrer 1 einen zylindrischen Schaftteil 2, der oben in einem Kopfteil 3 endigt. Im dargestellten Ausführungsbeispiel ist oder Kopfteil 3 mit einer Ringnut 4 und einer seitlichen, glatten, angefrästen Ausnehmung 5 als Mittel zu einer drehverbindenden Halterung in einem Bohrgerät versehen. Je nach dem zu verwendenden Bohrwerkzeug kann die Kopfbildung auch anders ausgebildet werden.

An den Schaftteil 2 schliesst ein Bohrer 6 an. Dieser ist mit Wendelnuten 7 versehen und als selbstschneidendes Bohrwerkzeug ausgebildet.

An das untere Ende des Bohrerteiles 6 schliesst erfindungsgemäss einstückig ein zylindrischer Stiftansatz 8 an. Da der Stiftansatz 8 einen geringeren Durchmesser als der Bohrerteil hat, besteht im Übergang eine Verjüngung 11 mit einem Winkel von etwa 90°. Es sind ebenfalls sich zu denjenigen beim Bohrerteil 6 verlängernde Wendelnuten 7' vorhanden. Die Spitze 9 des Stiftansatzes ist halbkugelförmig oder konvex oder ähnlichem ausgebildet. Durch diese Halbkugelform wird ermöglicht, dass der Bohrer praktisch bis an seine Spitze schneiden kann und somit das Aufbohren erleichtert wird. In der Regel ist in der Zahnwurzel 12 ein sehr schmales Loch 15 vorhanden, in welchem der Stiftansatz 8 geführt sein kann. Der Stiftansatz 8 samt seiner halbkugelförmigen Spitze 9 ist mit einer abrasiven Oberfläche 10 beschichtet, wobei das abrasive Material vorzugsweise aus Diamantkörnern besteht.

Die Länge des Bohrerteils 6 samt zylindrischem Stiftansatz 8 beträgt 15-18 mm, vorzugsweise etwa 16 mm. Der zylindrische Stiftansatz 8 hat eine Länge von 5-8 mm, vorzugsweise etwa 6 mm. Der Bohrerteil hat einen Durchmesser von etwa 2 mm und der Durchmesser des Stiftansatzes liegt bei 1,3 bis 1,6 mm, vorzugsweise 1,4 mm.

Ein auf den Kopfteil 3 aufgesetztes Werkzeug erlaubt eine Verbindung mit einem Drehantrieb, mit dem die Bohroperation durchgeführt werden kann.

Beim Aufbohren der Zahnwurzel 12 wird der Bohrer 1 in etwa bis auf eine Tiefe - wie in Fig.1 dargestellt ist - hineingebohrt, so dass der Stiftansatz 8 des Bohrers 1 im unteren Teil, nahe beim Grund 12' der Wurzel 12, zu liegen kommt, d.h. dass von der Spitze des Ansatzes 8 bis zum Wurzelende noch maximal ein paar Millimeter übrig bleiben. Mit diesem Bohrer ist als weiterer Vorteil gewährleistet, dass das mit dem Ansatz 8 beim Aufbohren erzeugte Bohrmehl durch die vorteilhaft auch beim Stiftansatz 8 sich entlang erstreckenden Wendelnuten 7, 7' des Bohrerteils 6 abgeführt wird.

Nach durchgeführter Bohroperation, bei der der Stiftansatz 8 die vorgesehene Tiefe erreicht hat, wird der Bohrer aus der Zahnwurzel herausgezogen und ein Gewindestift in die Öffnung eingedreht, was nicht näher dargestellt ist. Dabei greift die Spitze dieses Gewindestiftes mit mehreren Windungen in die Wandung der vom Stiftsansatz 8 erzeugten Öffnung ein. Der obere Teil des Gewindestiftes drückt dabei gegen die Wandung der vom Bohrer erzeugten Öffnung in der Zahnwurzel oder greift in diese ein.

Die Extraktion der Zahnwurzel erfolgt hernach unter Zuhilfenahme eines in den Mund eingesetzten Werkzeuges. Dies kann entweder ein zangenartiges Werkzeug sein, wobei der eine Schenkel durch ein Verbindungsglied mit dem mit einer Öse versehenen Gewindestift verbunden wird, oder bei einer anderen Variante kann es in der Verwendung eines teilweise in den Mund eingeführten, manuell betätigbaren Spanngerätes verwirklicht sein. Der Kopf des Gewindestiftes wird dann über ein Zugseil oder dergleichen mit einem Schlitten des Spanngerätes verbunden. Durch Drehen einer Schraube lässt sich der Schlitten linear bewegen und über den Gewindestift wird eine Zugkraft in Zahn-Längsrichtung für die Extraktion der Zahnwurzel ausgeübt.

Bei mehrwurzeligen Zähnen kann es zweckmässig sein, eine Spaltung eines solchen Zahnes vorzusehen und die einzelnen Wurzelteile in der zuvor beschriebenen Weise zu extrahieren.

Die Erfindung ist mit den oben erläuterten Ausführungsbeispielen ausreichend dargetan. Sie liesse sich jedoch noch in anderen Varianten darstellen. Im Prinzip könnte der gesamte Bohrer aus abrasivem Material, so wie dies beim Stiftansatz der Fall ist, hergestellt sein. Auch der vordere Stiftansatz ist mit Vorteil mit einer oder mehreren Wendelnuten 7' versehen.

## Patentansprüche

1. Bohrer zur Extraktion von Zahnwurzeln, mit einem Schaft (2), dessen Kopf (3) mit Mitteln zu einer drehverbindenden Halterung in einem Bohrgerät versehen ist, und mit einem annähernd zylindrischen Stiftansatz (8), der an seiner Spitze (9) sowie am zylindrischen Mantel eine abrasive Oberfläche (10) aufweist, **dadurch gekennzeichnet, dass**
zwischen dem Schaft (2) und dem zylindrischen Stiftansatz (8) ein aufbohrender Bohrerteil (6) vorhanden ist, wobei vorzugsweise der Durchmesser des zylindrischen Stiftansatzes (8) gegenüber dem aufbohrenden Bohrerteil (6) geringer ist.

2. Bohrer nach Anspruch 1, **dadurch gekennzeichnet, dass** dieser zylindrische Stiftansatz (8) eine Länge zwischen 5 und 8 mm und einen Durchmesser von 1,3 bis 1,6 mm aufweist.

3. Bohrer nach Anspruch 1, **dadurch gekennzeichnet, dass** der Stiftansatz (8) eine Länge von mindestens angenähert 6 mm und einen Durchmesser von mindestens angenähert 1,3 mm hat.

4. Bohrer nach Anspruch 1, 2 oder 3, **dadurch gekennzeichnet, dass** das abrasive Material des Stiftansatzes (8) im wesentlichen aus Diamantkörnern besteht.

5. Bohrer nach einem der Ansprüche 1 bis 4, **dadurch gekennzeichnet, dass** der Stiftansatz (8) an seiner abrasiven Spitze gerundet ist und am Übergang vom Bohrerteil (6) zum Ansatz (8) eine Verjüngung (11) vorhanden ist.

6. Bohrer nach einem der Ansprüche 1 bis 5, **dadurch gekennzeichnet, dass** der Durchmesser des Bohrerteiles (6) mindestens angenähert 2 mm und die Gesamtlänge des Bohrerteils (6) samt Stiftansatz (9) mindestens annähernd 16 mm beträgt.

7. Bohrer nach einem der Ansprüche 1 bis 6, **dadurch gekennzeichnet, dass** der Bohrerteil (6) als selbstschneidende Schraube ausgebildet ist.

8. Bohrer nach einem der Ansprüche 1 bis 7, **dadurch gekennzeichnet, dass** der Bohrerteil (6) wenigstens eine das Rohrmaterial abführende Wendelnut (7) und der Stiftansatz (8) zumindest eine zu derjenigen beim Bohrerteil (6) sich verlängernde Wendelnut (7') aufweist.

## Claims

1. Drill for extracting roots of tooth, with a shaft (2), whose head (3) is provided with means for a rotating connected support in a drill apparatus, and with an approximate cylindrical pin-base (8), which is provided with an abrasive surface (10) at his tip (9) and at the cylindrical mantle, **characterised in that**
a drill part (6) is provided between the shaft (2) and the cylindrical pin-base (8), whereas the diameter of the cylindrical pin-base (8) is preferably smaller than the drilling out drill part (6).

2. Drill according to claim 1, **characterised in that** this cylindrical pin-base (8) having a length between 5 and 8 mm and a diameter of 1,3 to 1,6 mm.

3. Drill according to claim 1, **characterised in that** the pin-base (8) having a length of at least approximately 6 mm and a diameter of at least approximately 1,3 mm.

4. Drill according to claim 1, 2 or 3, **characterised in that** the abrasive material of the pin-base (8) is in essential made of grains of diamond.

5. Drill according to any one of the claims 1 to 4, **characterised in that** the pin-base (8) is rounded at its abrasive tip and a taper (11) is provided at the transition of the drill part (6) to the base (8).

6. Drill according to any one of the claims 1 to 5, **characterised in that** the diameter of the drill part (6) amounts at least approximately 2 mm and the total length of the drill part (6) including the pin-base (9) at least approximately 16 mm.

7. Drill according to any one of the claims 1 to 6, **characterised in that** the drill part (6) is shaped as a self-cutting screw.

8. Drill according to any one of the claims 1 to 7, **characterised in that** the drill part (6) having at least one spiral nut (7) radiating away the drilled material and the pin-base (8) having at least one spiral nut (7') which is extending to those of the drill part (6).

## Revendications

1. Fraise destinée à extraire des racines dentaires, ladite fraise comportant une tige (2) dont la tête (3) est dotée de moyens de fixation en rotation dans un appareil de fraisage, et un téton (8) à peu près cylindrique qui présente une surface abrasive (10) à son extrémité (9) ainsi qu'au niveau de son enveloppe cylindrique, **caractérisée en ce que**
entre la tige (2) et le téton cylindrique (8) se trouve une partie de fraise formant aléseuse (6), le diamètre du téton cylindrique (8) étant de préférence inférieur à celui de la partie de fraise formant aléseuse (6).

2. Fraise selon la revendication 1, **caractérisée en ce que** ce téton cylindrique (8) a une longueur comprise entre 5 et 8 mm et un diamètre de 1,3 mm à 1,6 mm.

3. Fraise selon la revendication 1, **caractérisée en ce que** le téton (8) a une longueur d'au moins 6 mm environ et un diamètre d'au moins 1,3 mm environ.

4. Fraise selon la revendication 1, 2 ou 3, **caractérisée en ce que** le matériau abrasif du téton (8) est essentiellement constitué de grains de diamant.

5. Fraise selon l'une des revendications 1 à 4, **caractérisée en ce que** le téton (8) est arrondi au niveau de sa pointe abrasive et **en ce qu'**il y a un amincissement (11) au niveau de la transition de la partie de fraise (6) au téton (8).

6. Fraise selon l'une des revendications 1 à 5, **caractérisée en ce que** le diamètre de la partie de fraise (6) est d'au moins 2 mm environ et la longueur totale de la partie de fraise (6), y compris le téton (9), est d'au moins 16 mm environ.

7. Fraise selon l'une des revendications 1 à 6, **caractérisée en ce que** la partie de fraise (6) est conformée en vis autotaraudeuse.

8. Fraise selon l'une des revendications 1 à 7, **caractérisée en ce que** la partie de fraise (6) comporte au moins une gorge hélicoïdale (7) évacuant le matériau fraisé et le téton (8) comporte une gorge hélicoïdale (7') dans le prolongement celle de la partie de fraise (6).
